# EUROPÄISCHE PATENTSCHRIFT

(11) **EP 0 612 645 B1**
(45) Veröffentlichungstag und Bekanntmachung des Hinweises auf die Patenterteilung: **03.04.1996**
(21) Anmeldenummer: 94100843.5
(22) Anmeldetag: 21.01.1994
(51) Int. Cl.: B60T 13/58, B60T 13/66

(54) **Druckluftbremse für Schienenfahrzeuge**
Air pressure brake for railway vehicles
Frein à air comprimé pour véhicules sur rails

(30) Priorität: 24.02.1993 DE 4305679
(43) Veröffentlichungstag der Anmeldung: 31.08.1994
(73) Patentinhaber: KNORR-BREMSE AG, D-80809 München (DE)
(72) Erfinder: Huber, Erich, D-80333 München -Verstorben- (DE); Goritz, Bernd, D-80809 München (DE)

(56) Entgegenhaltungen:
- DE-A- 2 333 637
- US-A- 4 199 195
- US-A- 4 744 607

## Beschreibung

Die Erfindung betrifft eine Druckluftbremse für zusätzlich mit einer weiteren, vorzugsweise elektrischen Bremse ausgestattete Schienentriebfahrzeuge, mit einem in eine Bremsdruckleitung eingeordneten Absperrventil, wobei die Bremsdruckleitung ein vom Druck in einer Hauptluftleitung gesteuertes Bremssteuerventil direkt oder indirekt mit wenigstens einem Bremszylinder verbindet und wobei das Absperrventil ein 3/2-Wegeventil beinhaltet, das in seiner einen, unwirksamer weiterer Bremse entsprechenden Schaltstellung den Durchgang durch die Bremsdruckleitung freigibt und in seiner anderen, wirksamer weiterer Bremse entsprechenden Schaltstellung den Durchgang sperrt und den bremszylinderseitigen Abschnitt der Bremsdruckleitung mit der Atmosphäre verbindet.

Die weitere, vorzugsweise elektrische Bremse ist hierbei üblicherweise eine elektrogeneratorische Bremse, es kann jedoch auch eine Wirbelstrombremse bzw. eine hydraulische Bremse vorgesehen sein. Diese weitere Bremse wirkt im allgemeinen verschleißfrei und/oder sie gestattet eine Energierückgewinnung; aufgrund dieses günstigen Verhaltens wird während Bremsungen des Schienentriebfahrzeuges diese weitere Bremse bevorzugt betätigt: Erst dann, wenn die Wirkung dieser weiteren Bremse nicht mehr ausreicht, wird zusätzlich oder auch alleine die Druckluftbremse betätigt. Vergleiche z.B. die diesbezüglichen Ausführungen in DE-B-2 333 637. Die Bremswirkung der weiteren Bremse kann beispielsweise bei sehr starken Bremsanforderungen, bei langsamen Fahrgeschwindigkeiten oder auch bei ihrem Ausfall nicht mehr ausreichen. Bei Auftreten einer Bremsanforderung werden sowohl das Bremssteuerventil der Druckluftbremse wie die weitere Bremse betätigt, bei Wirksamkeit der weiteren Bremse hält das Absperrventil den bremszylinderseitigen Abschnitt der Bremsdruckleitung entlüftet und schließt so trotz Ansprechens des Bremssteuerventils eine Bremswirkung durch die Druckluftbremse aus, die pneumatische Bremse wird also zurückgehalten. Bei einer derartigen Druckluftbremse besteht jedoch die Gefahr, daß bei fehlerhafter Ansteuerung des Absperrventils oder bei dessen Fehlfunktion, beispielsweise durch ein mechanisches Verklemmen, der Durchgang durch die Bremsdruckleitung auch bei Unwirksamkeit der weiteren Bremse nicht wiederherstellbar ist und somit vermittels der Druckluftbremse keine Bremswirkung mehr erzielbar ist. Es ist somit die Gefahr eines völligen Bremsenausfalls für das Schienentriebfahrzeug gegeben.

Es ist Aufgabe der Erfindung, eine Druckluftbremse der eingangs genannten Art derart auszugestalten, daß mit einfachen Mitteln die vorstehend erwähnte Gefahr eines Ausfallens der Druckluftbremse hinsichtlich ihrer Bremswirkung bei unwirksamer, weiterer Bremse vermieden wird.

Diese Aufgabe wird nach der Erfindung dadurch gelöst, daß ein das 3/2-Wegeventil überbrückendes Bypaßventil vorgesehen ist, welches nur bei den Regelbereich überschreitender Betätigung bzw. Ansteuerung der Druckluftbremse geöffnet ist und hierbei den Durchgang durch die Bremsdruckleitung unabhängig vom Schaltzustand des 3/2-Wegeventils freigibt, und daß die Verbindung des bremszylinderseitigen Abschnittes der Bremsdruckleitung mit der Atmosphäre zumindest bei geöffnetem Bypaßventil zumindest gedrosselt ist.

Durch das Bypaßventil wird sichergestellt, daß bei Einleiten einer Schnellbremsung, wobei eine den Regelbereich der Druckluftbremse überschreitende Betätigung durch Absenken des Druckes in der Hauptluftleitung auf einen sehr niederen, einen Schwellenwert unterschreitenden Druck, insbesondere eine vollständigen Entlüftung der Hauptluftleitung erfolgt, stets, auch bei Fehlverhalten des Absperrventils, ein Durchgang durch die Bremsdruckleitung freigegeben ist und das Bremssteuerventil somit in den bremszylinderseitigen Abschnitt der Bremsdruckleitung einen Bremsdruck einzusteuern vermag. Die Drosselung oder auch Absperrung der Atmosphärenverbindung des bremszylinderseitigen Bremsdruckleitungs-Abschnittes gewährleistet dabei, daß zumindest bis zum Anhalten des Schienentriebfahrzeuges eine ausreichend hohe Bremszylinderdruckbeaufschlagung erhalten bleibt.

Die Unteransprüche zeigen nach der weiteren Erfindung vorteilhafte Ausgestaltungsmöglichkeiten für eine derartig ausgebildete Druckluftbremse auf.

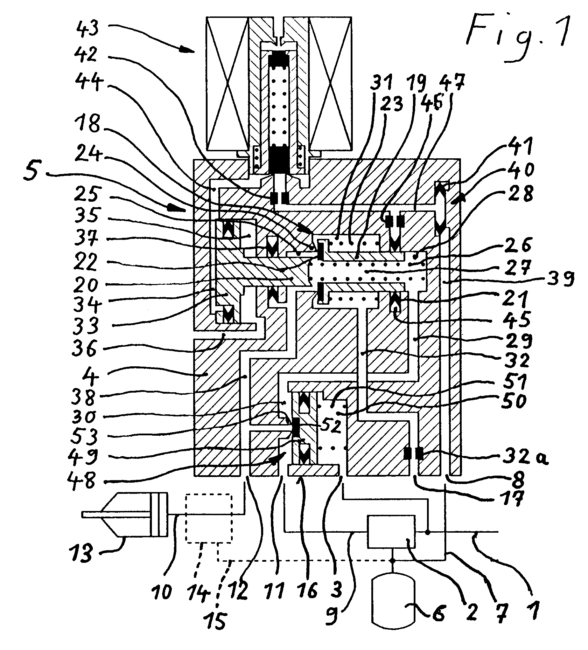

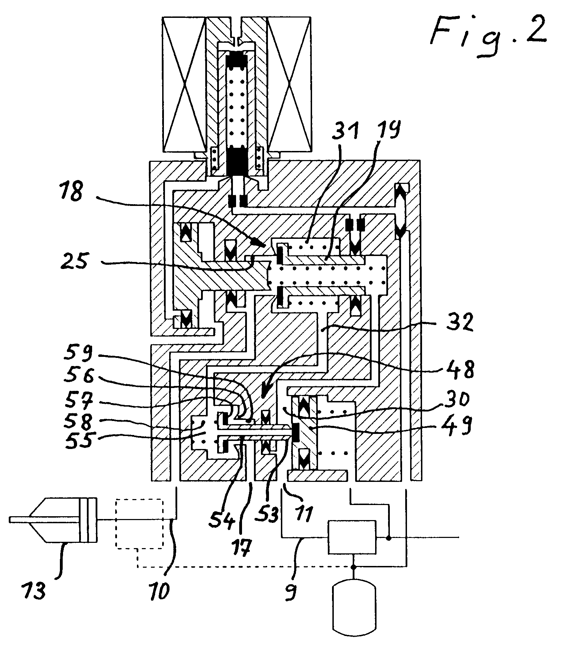

In den Zeichnungen Fig.1 und Fig.2 sind zwei Ausführungsbeispiele für nach der Erfindung ausgebildete Druckluftbremsen schematisch dargestellt.

Gemäß der Zeichnung Fig.1 führt eine Hauptluftleitung 1 zu einem Bremssteuerventil 2 und zu einer Anschlußöffnung 3 im Gehäuse 4 eines Absperrventils 5. Das Bremssteuerventil 2 steht mit einem Vorratssluftbehälter 6 in Verbindung, welcher über eine in das Bremssteuerventil 2 integrierte, übliche Füllvorrichtung aus der Hauptluftleitung 1 oder aus einer sonstigen, nicht dargestellten Druckluftquelle mit Druckluft aufladbar ist. Vom Vorratsluftbehälter 6 führt eine Rohrleitung 7 zu einer Anschlußöffnung 8 im Gehäuse 4, welche der Druckluftzuführung dient. Der Bremsdruckausgang des Bremssteuerventils 2 ist durch eine Rohrleitung, welche den bremssteuerventilseitigen Abschnitt 9 einer Bremsdruckleitung 9,10 bildet, mit einer Anschlußöffnung 11 des Gehäuses 4 verbunden. Von einer weiteren Anschlußöffnung 12 des Gehäuses 4 führt eine Rohrleitung, welche einen bremszylinderseitigen Abschnitt 10 der Bremsdruckleitung 9,10 darstellt, zu wenigstens einem Bremszylinder 13. Die Abschnitte 9 und 10 bilden zusammen die Bremsdruckleitung 9,10. In den bremszylinderseitigen Abschnitt 10 der Bremsdruckleitung 9,10 kann ein Relaisventil 14 eingeordnet sein, wie es strichpunktiert dargestellt ist und welches durch eine Rohrleitung 15 mit Druckluft aus dem Vorratsluftbehälter 6 versorgbar ist.

Das Gehäuse 4 weist eine Flanschfläche 16 auf, mittels welcher es in nicht dargestellter Weise an einem nicht dargestelltem Ventilträger anflanschbar ist, welcher in bekannter und üblicher Weise eine Verbindung von den Rohrleitungen 1, 7, 9 und 10 zu den in dieser Flanschfläche 16 befindlichen Anschlußöffnungen 3, 8, 11 und 12 vermittelt. Eine weitere Anschlußöffnung 17 in der Flanschfläche 16 des Gehäuses 4 führt über ein nicht dargestelltes Entlüftungsventil bzw. Entlüftungsfilter zur Atmosphäre. Im Gehäuse 4 befindet sich ein 3/2-Wegeventil 18, welches als bewegliche Teile ein Ventilrohr 19 und einen gleichachsig zu diesem angeordneten Stößel 20 aufweist. Das Ventilrohr 19 ist im Gehäuse 4 vermittels eines in letzterem gehalterten, radialen Lippendichtringes 21 abgedichtet verschieblich gelagert, es trägt stößelseitig an seinem Ende einen Ventildichtring 22, welcher unter der Kraft einer das Ventilrohr 19 belastenden Feder 23 gegen einen gehäusefesten Ventilsitz 24 anlegbar ist. Der Stößel 20 durchragt einen vom Ventilsitz 24 umschlossenen Raum 25 und ist mit seinem ventilsitzartig ausgebildeten, verschlossenem Ende ebenfalls gegen den Ventildichtring 22 entgegen der Kraft einer den Stößel 20 belastenden Feder 26 anlegbar, derart, daß er den Innenraum 27 des Ventilrohres 19 gegen den Raum 25 absperrt. Dem Ventildichtring 22 abgewandt endet das Ventilrohr 19 in einem Raum 28, welcher durch einen Verbindungskanal 29 mit einem weiteren Raum 30 im Gehäuse 4 sowie der Anschlußöffnung 11 in Verbindung steht. Das den Ventildichtring 22 tragende Ende des Ventilrohres 19 befindet sich in einem Raum 31, in welchem sich die Feder 23 befindet und welcher durch einen Verbindungskanal 32 zur Anschlußöffnung 17 ständig mit der Atmosphäre in Verbindung steht.

In den Verbindungskanal 32 ist eine Drossel 32a eingeordnet; in Abwandlung hierzu ist es auch möglich, den Verbindungskanal 32 selbst als Drossel zu dimensionieren, so daß die gesonderte Drossel 32a entfallen kann. Der Stößel 20 ist abgedichtet verschieblich im Gehäuse 4 gelagert und ist an seinem dem Ventilrohr 19 abgewandten Ende mit einem Kolben 33 verbunden, welcher in Andrückrichtung an den Ventildichtring 22 von einem Steuerdruck in einem Raum 34 und andererseits vom Atmosphärendruck in einem Raum 35 beaufschlagt ist; der Raum 35 steht über einen Entlüftungskanal 36 in ständiger Verbindung zur Atmosphäre. Abweichend zur Darstellung in Fig.1 kann die Atmosphärenverbindung des Raumes 35 auch zum Verbindungskanal 32 erfolgen. Die abgedichtete Verschieblichkeit des Stößels 20 gewährt ein im Gehäuse 4 gelagerter, zweiter radialer Lippendichtring 37, dessen radiale Außenseite vom Druck im Raum 25 belastet ist. Der Raum 25 ist durch einen Verbindungskanal 38 mit der Anschlußöffnung 12 verbunden.

Von der Anschlußöffnung 8 führt ein Luftversorgungskanal 39 über ein in dieser Strömungsrichtung öffnendes Rückschlagventil 40, welches von einem im Gehäuse 4 gehalterten dritten, radialen Lippendichtring 41 gebildet wird, durch eine Drosselstelle 42 zu einem Magnetventil 43. Das Magnetventil 43 ist patronenartig ausgebildet und an das Gehäuse 4 vorzugsweise durch eine Schraubenverbindung angesetzt. Das in bekannter Weise als 3/2-Wegeventil ausgebildete Magnetventil 43 schaltet die Verbindung eines zum Raum 34 führenden Verbindungskanals 44 zum Luftversorgungskanal 39 bzw. unter Absperren des letzteren zur Atmosphäre. Der Aufnahmeraum 45 für den Lippendichtring 21 ist radial außen über eine Drosselstelle 46 an den Abschnitt 47 des Luftversorgungskanals 39 angeschlossen, welcher sich zwischen dem Rückschlagventil 40 und dem Magnetventil 43 befindet.

Mit zum 3/2-Wegeventil 18 paralleler, jedoch seitlich versetzter Achsrichtung befindet sich im Gehäuse 4 ein Bypaßventil 48. Das Bypaßventil 48 weist einen Kolben 49 auf, der den Raum 30 von einem weiteren Raum 50 abtrennt; der Raum 50 steht mit der Anschlußöffnung 3 in Verbindung, ist somit vom Druck in der Hauptluftleitung 1 beaufschlagt und beinhaltet eine den Kolben 49 belastende Feder 51. Die Feder 51 drückt den Kolben 49 mit einer an ihm befindlichen Ventildichtung 52 gegen einen in den Raum 30 ragenden Ventilsitz 53, dessen Innenraum mit dem Verbindungskanal 38 in Verbindung steht. In Abänderung vom dargestellten Ausführungsbeispiel kann der Kolben 49 mit der Ventildichtung 52 selbstverständlich auch als ein Membrankolben ausgebildet sein.

Bei unbetätigter, weiterer Bremse und gelöster oder maximal innerhalb ihres Regelbereiches betätigter Druckluftbremse nimmt das Absperrventil 5 die aus der Zeichnung ersichtliche Schaltstellung ein. Das Magnetventil 43 sperrt dabei den Luftversorgungskanal 39 vom Verbindungskanal 44 ab und entlüftet den letzteren mitsamt dem Raum 34 in die Atmosphäre. Unter der Kraft der Feder 26 befindet sich der Stößel 20 in seiner linken Endstellung, in welcher er von dem Ventildichtring 22 abgehoben ist; der Ventildichtring 22 liegt unter der Kraft der Feder 23 auf dem Ventilsitz 24 auf. Damit verbindet das 3/2-Wegeventil 18 die beiden Räume 28 und 25 und somit die Anschlußöffnungen 11 und 12 miteinander, der Durchgang durch die Bremsdruckleitung 9,10 ist somit freigegeben. Der Kolben 49 des Bypaßventils 48 liegt unter der Kraft der Feder 51 sowie seiner Druckbeaufschlagung durch den Hauptluftleitungsdruck vermittels der Ventildichtung 52 dicht auf dem Ventilsitz 53 auf. Dabei ist zu beachten, daß im Regelbereich der Druckluftbremse der Druck in der Hauptluftleitung 1 niemals unter den vom Bremssteuerventil 2 in dem Abschnitt 9 ausgesteuerten und damit im Raum 30 herrschenden Bremsdruck absinkt: Der Druck in der Hauptluftleitung 1 beträgt üblicherweise bei gelöster Druckluftbremse 5 bar und wird bis zum Erreichen maximaler Bremsstärke im Regelbereich auf ca. 3,6 bar, nachfolgend Grenzwert genannt, abgesenkt; der maximale Bremsdruck beträgt zwischen 2,8 bis 3,6 bar, der Kolben 49 wird also durch die Feder 51 im Regelbereich der Druckluftbremse jedenfalls in seiner dargestellten, den Ventilsitz 53 verschließenden Lage gehalten. Damit ist die Druckluftbremse voll funktionsfähig.

Wird die weitere Bremse betätigt, so schaltet das Magnetventil 43 um, wobei es unter Absperren des Verbindungskanals 44 von der Atmosphäre diesen Verbindungskanal 44 mit dem Luftversorgungskanal 39 verbindet. Über den Raum 34 wird daher der Kolben 33 druckluftbeaufschlagt und nach rechts verschoben, wobei sich das rechtsseitige, ventilsitzartige Ende des Stößels 20 gegen den Ventildichtring 22 anlegt und auf einem restlichen Hubweg mitsamt dem Ventilrohr 19 mitnimmt, der Ventildichtring 22 wird dabei vom Ventilsitz 24 abgehoben. In der so erreichten Schaltstellung sperrt das 3/2-Wegeventil 18 die beiden Verbindungskanäle 29 und 38 voneinander ab, wodurch der Durchgang durch die Bremsdruckleitung 9,10 unterbrochen wird, und schließt den Verbindungskanal 38 an den Raum 31 und damit durch den Verbindungskanal 32 an die Atmosphäre an. In dieser Schaltstellung wird unabhängig von einem Einspeisen eines Bremsdruckes durch das Bremssteuerventil 2 in den Abschnitt 9, beispielsweise durch eine bereits anstehende oder eine erst erfolgende Betriebsbremsung, der Abschnitt 10 der Bremsdruckleitung 9,10 und damit der Bremszylinder 13 entlüftet bzw. entlüftet gehalten, die Druckluftbremse kann somit unabhängig von einer Betätigung des Bremssteuerventils 2 innerhalb seines Regelbereiches, d.h. einer Druckabsenkung in der Hauptluftleitung 1 auf einen den vorstehend erwähnten Grenzwert nicht unterschreitenden Wert, keine Bremswirkung erzeugen. Ein Überlagern der Bremswirkungen der weiteren Bremse und der Druckluftbremse ist somit ausgeschlossen, es kann kein Überbremsen des Schienentriebfahrzeuges auftreten.

Beim Lösen der weiteren Bremse schaltet bei voll funktionsfähigem Absperrventil 5 das Magnetventil 43 zurück und das 3/2-Wegeventil 18 schaltet in die aus der Zeichnung ersichtliche, den Druchgang durch die Bremsdruckleitung 9,10 freigegebene Schaltstellung zurück. Sollten hierbei jedoch Störungen auftreten, beispielsweise das Rückschalten des Magnetventils 43 durch einen Ansteuerungs- oder sonstigen Funktionsfehler oder das Rückschalten des 3/2-Wegeventils 18 durch Verklemmen eines seiner beweglichen Teile nicht erfolgen, so hält das 3/2-Wegeventil 18 trotz unbetätigter, weiterer Bremse den Durchgang durch die Bremsdruckleitung 9,10 unterbrochen und den Abschnitt 10 mit den Bremszylinder 13 entlüftet, die Druckluftbremse ist somit innerhalb ihres Regelbereiches funktionsunfähig. Bei Auftreten einer derartigen Störung ist in die Druckluftbremse eine übliche Schnellbremsung einzuleiten, bei welcher der Druck in der Hauptluftleitung 1 auf einen Druckwert unterhalb des Regelbereiches, also unterhalb des vorstehend erwähnten Grenzwertes liegenden Druck, vorzugsweise auf Atmosphärendruck entlüftet wird. Damit erfolgt auch eine entsprechende Druckabsenkung im Raum 50, während das Bremssteuerventil 2 in den Abschnitt 9 einen maximalen Bremsdruck aussteuert. Dieser Bremsdruck beaufschlagt über den Raum 30 den Kolben 49, wodurch dieser entgegen der Kraft der Feder 41 und unter Abheben seiner Ventildichtung 52 vom Ventilsitz 53 nach rechts verschoben wird. Hierdurch werden die beiden Abschnitte 9 und 10 der Bremsdruckleitung 9,10 miteinander verbunden, der Durchgang durch die Bremsdruckleitung 9,10 wird durch das Bypaßventil 48 geöffnet und der Bremszylinder 13 druckluftbeaufschlagt. Die Drossel 32a verzögert dabei eine durch die noch geöffnete Verbindung der Verbindungskanäle 38 und 32 mögliche Druckluftabströmung zur Atmosphäre derart, daß die Druckluftbeaufschlagung des Bremszylinders 13 durch entsprechende Druckluftnachspeisung aus dem Vorratsluftbehälter 6 jedenfalls bis zum Anhalten des Schienentriebfahrzeuges anhält. Das Schienentriebfahrzeug wird somit durch die Druckluftbremse abgebremst, so daß keine Unfallgefahr durch Bremsenausfall mehr besteht.

Wird beim nachfolgenden Lösen der Druckluftbremse der Druck in der Hauptluftleitung 1 über den erwähnten Grenzwert in den Regelbereich für die Druckluftbremse erhöht, so schaltet das Bypaßventil 48 in die dargestellte Schaltstellung unter Unterbrechen des Durchganges durch die Bremsdruckleitung 9,10 zurück.

Das vorstehend beschriebene Schalten des Bypaßventils 48 erfolgt bei jeder Schnellbremseinsteuerung für die Druckluftbremse, unabhängig von einer Wirksamkeit der weiteren Bremse, und wird hierdurch gängig und funktionsfähig gehalten. Sollen Überbremsungen des Schienentriebfahrzeuges vermieden werden, so ist es zweckmäßig, die weitere Bremse wie üblich bei Schnellbremsungen und somit jedenfalls wirksamer Druckluftbremse abzuschalten.

Durch das Rückschlagventil 40 wird die Druckluftversorgung des Magnetventils 43, welche zum Schalten des 3/2-Wegeventils 18 erforderlich ist, sichergestellt. Bei einer Unterbrechung der Rohrleitung 7 und somit mangelnder Druckluftzuführung zur Anschlußöffnung 8 kann während Bremsdruckeinspeisungen in den Abschnitt 9 aus dem Raum 28 Druckluft an den Dichtlippen des Lippendichtringes 21 vorbei zum Aufnahmeraum 45 und weiter durch die Drosselstellen 46 sowie 42 zum Magnetventil 43 gelangen, während ein Abströmen dieser Druckluft zur Anschlußöffnung 8 durch das Rückschlagventil 40 ausgeschlossen ist. Vermittels dieser Druckluftversorgung des Magnetventils 43 verbleibt das 3/2-Wegeventil 18 auch bei gestörter Druckluftzuführung zur Anschlußöffnung 8 schaltbar.

Soll das Abblasen vom Druckluft während Schnellbremsungen bei gestörtem 3/2-Wegeventil 18, wie es vorstehend beschrieben ist, vermieden werden, so ist das Bypaßventil 48 gemäß Fig.2 umzugestalten. Dabei ergibt sich als weiterer Vorteil, daß die Drossel 32a bzw. die Ausbildung des Verbindungskanals 32 als Drossel entfallen kann, wodurch beim Schalten des funktionsfähigen 3/2-Wegeventils 18 während bereits im Regelbereich betätigter Druckluftbremse und bei Wirksamwerden der weiteren Bremse ein rasches Entlüften des Bremszylinders 13 möglich ist.

Gemäß Fig.2 befindet sich der Ventilsitz 53 des Bypaßventils 48 an einem im Gehäuse 4 abgedichtet verschieblich gelagerten Ventilrohr 54, das andersseitig in einem Raum 55 mit einem einem gehäusefesten, vom Ventilrohr 54 durchragten Ventilsitz 56 zugewandten Ventildichtring 57 endet. Im Raum 55 befindet sich eine das Ventilrohr 54 in Andrückrichtung des Vetildichtringes 57 an den Ventilsitz 56 belastende Feder 58, der Raum 55 ist an den von der Anschlußöffnung 17 abgetrennten Verbindungskanal 32 angeschlossen. Der Ringraum 59 zwischen dem Ventilsitz 56 und dem diesen durchragenden Ventilrohr 54 steht mit der Anschlußöffnung 17 und damit der Atmosphäre in Verbindung. Im übrigen entspricht die Ausführung der Druckluftbremse derjenigen nach Fig.1.

In der in Fig.1 dargestellten Normalstellung des Bypaßventils 48 hält der Kolben 49 das Ventilrohr 54 in dessen linker Endstellung, in welcher der Ventildichtring 57 vom Ventilsitz 56 abgehoben und somit der Verbindungskanal 32 durch den Raum 55 und den Ringraum 59 mit der Anschlußöffnung 17 verbunden ist. Die Arbeitsweise der Druckluftbremse in deren Rgelbereich entspricht dabei vollstädig der jenigen, wie sie vorstehend zu Fig.1 beschrieben ist.

Bei in die Druckluftbremse eingesteuerten Schnellbremsungen hebt sich der Kolben 49 vom sich in seine rechte Endstellung verschiebenden Ventilrohr 54 ab, der Ventildichtring 57 setzt sich dabei auf den Ventilsitz 56 auf. Damit wird der Verbindungskanal 32 vom Ringraun 59 und der Anschlußöffnung 17 abgetrennt und durch das Ventilrohr 54 mit dem Raum 30 und der Anschlußöffnung 11 verbunden. Sollte hierbei das 3/2-Wegeventil 18 sich infolge einer Störung wie vorstehend beschrieben in einer die Räume 25 und 31 verbindenden Schaltstellung befinden, so ist der Durchgang durch die Bremsdruckleitung 9,10 doch durch das Bypaßventil 48 geöffnet, während eine Entlüftung des Bremszylinders 13 durch den Abschnitt 10, die genannten Räume 25 und 31 und den Verbindungskanal 32 durch den den Ventilsitz 56 verschließenden Ventildichtring 57 und damit Absperren der Anschlußöffnung 17 ausgeschlossen ist.

In Abänderung ist es selbstverständlich auch möglich, abweichend zur Ausführung nach Fig.2 bei geschaltetem Bypaßventil 48 die Anschlußöffnung 17 nicht vollständig abzusperren, sondern durch eine begrenzte Undichtigkeit des aus dem Ventilsitz 56 und der Ventildichtung 57 gebildeten Ventils bzw. eine dieses Ventil überbrückende, relativ enge Düse eine geringe Druckluftabströmung zu ermöglichen. Das Abströmgeräusch bei unbetätigter, weiterer Bremse zeigt hierbei bei nur geringem Druckluftverlust die Fehlfunktion des 3/2-Wegeventils an.

In weiterer Abänderung der Ausführungsbeispiele nach Fig.1 und 2 ist es auch möglich, das Bypaßventil 48 nicht im Gehäuse 4 integriert, sondern als gesondertes Bauelement auszuführen.

### Bezugszeichenliste

- 1: Hauptluftleitung
- 2: Bremssteuerventil
- 3: Anschlußöffnung
- 4: Gehäuse
- 5: Absperrventil
- 6: Vorratsluftbehälter
- 7: Rohrleitung
- 8: Anschlußöffnung
- 9: Abschnitt
- 10: Abschnitt
- 9,10: Bremsdruckleitung
- 11: Anschlußöffnung
- 12: Anschlußöffnung
- 13: Bremszylinder
- 14: Relaisventil
- 15: Rohrleitung
- 16: Flanschfläche
- 17: Anschlußöffnung
- 18: 3/2-Wegeventil
- 19: Ventilrohr
- 20: Stößel
- 21: Lippendichtring
- 22: Ventildichtring
- 23: Feder
- 24: Ventilsitz
- 25: Raum
- 26: Feder
- 27: Innenraum
- 28: Raum
- 29: Verbindungskanal
- 30: Raum
- 31: Raum
- 32: Verbindungskanal
- 32a: Drossel
- 33: Kolben
- 34: Raum
- 35: Raum
- 36: Entlüftungskanal
- 37: Lippendichtring
- 38: Verbindungskanal
- 39: Luftversorgungskanal
- 40: Rückschlagventil
- 41: Lippendichtring
- 42: Drosselstelle
- 43: Magnetventil
- 44: Verbindungskanal
- 45: Aufnahmeraum
- 46: Drosselstelle
- 47: Abschnitt
- 48: Bypaßventil
- 49: Kolben
- 50: Raum
- 51: Feder
- 52: Ventildichtung
- 53: Ventilsitz
- 54: Ventilrohr
- 55: Raum
- 56: Ventilsitz
- 57: Ventildichtring
- 58: Feder
- 59: Ringraum

## Patentansprüche

1. Druckluftbremse für zusätzlich mit einer weiteren, verzugsweise elektrischen Bremse ausgestattete Schienentriebfahrzeuge, mit einem in eine Bremsdruckleitung (9,10) eingeordneten Absperrventil (5), wobei die Bremsdruckleitung (9,10) ein vom Druck in einer Hauptluftleitung (1) gesteuertes Bremssteuerventil (2) direkt oder indirekt mit wenigstens einem Bremszylinder (13) verbindet und wobei das Absperrventil (5) ein 3/2-Wegeventil (18) beinhaltet, das in seiner einen, unwirksamer weiterer Bremse entsprechenden Schaltstellung den Druchgang durch die Bremsdruckleitung (9,10) freigibt und in seiner anderen, wirksamer weiterer Bremse entsprechenden Schaltstellung den Durchgang sperrt und den bremszylinderseitigen Abschnitt (20) der Bremsdruckleitung (9,10) mit der Atmosphäre verbindet, dadurch gekennzeichnet, daß ein das 3/2-Wegeventil (18) überbrückendes Bypaßventil (48) vorgesehen ist, welches nur bei den Regelbereich überschreitender Betätigung bzw. Ansteuerung der Druckluftbremse geöffnet ist und hierbei einen Durchgang durch die Bremsdruckleitung (9,10) unabhängig vom Schaltzustand des 3/2-Wegeventils (18) freigibt, und daß die Verbindung des bremszylinderseitigen Abschnittes (10) der Bremsdruckleitung (9,10) mit der Atmosphäre zumindest bei goöffnetem Bypaßventil (48) zumindest gedrosselt ist.

2. Druckluftbremse nach Anspruch 1, dadurch gekennzeichnet, daß das Bypaßventil (48) von einem Kolben (49) schaltbar ist, der in Ventilschließrichtung vom Druck in der Hauptluftleitung (1) beaufschlagt ist.

3. Druckluftbremse nach Anspruch 2, dadurch gekennzeichnet, daß der Kolben (49) in Ventilöffnungsrichtung von Druck im bremsventilseitigen Abschnitt (9) der Bremsdruckleitung (9,10) beaufschlagt ist.

4. Druckluftbremse nach Anspruch 3, dadurch gekennzeichnet, daß der Kolben (49) in Ventilschließrichtung von einer Feder (51) belastet ist.

5. Druckluftbremse nach einem oder mehreren der Ansprüche 2 bis 4, dadurch gekennzeichnet, daß das Bypaßventil (48) einen festen Ventilsitz (53) aufweist, der in einen vom bremsventilseitigen Abschnitt (9) zum bremszylinderseitigen Abschnitt (10) der Bremsdruckleitung (9,10) führenden Druckluftkanal eingeordnet ist und der von einer am Kolben (49) befindlichen Ventildichtung (52) bei dessen überwiegender Hauptluftleitungsdruckbeaufschlagung dicht abdeckbar ist.

6. Druckluftbremse nach einem oder mehreren der vorstehenden Ansprüche, dadurch gekennzeichnet, daß das Bypaßventil (48) in das Gehäuse (4) des Absperrventils (5) integriert angeordnet ist.

7. Druckluftbremse nach Anspruch 6, dadurch gekennzeichnet, daß das 3/2-Wegeventil (18) ein einerseits mit einem Ventildichtring (22) endendes Ventilrohr (19), das mit einem gehäusefesten Ventilsitz (24) zusammenwirkt, das im Gehäuse (4) abgedichtet verschieblich gelagert ist und das von einer Feder (23) in Verschieberichtung zum Ventilsitz (24) belastet ist, und einen zum Ventilrohr (19) gleichachsigen, im Gehäuse (4) verschieblichen Stößel (20) aufweist, wobei der Stößel (20) entgegen der Kraft einer Feder (23) gegen den Ventildichtring (22), das Ventilrohr (19) verschließend, unter der Kraft eines Kolbens (33) andrückbar ist, und wobei der Kolben (33) in Andrückrichtung von einem durch ein Magnetventil (43) gesteuerten Steuerdruck beaufschlagbar ist.

8. Drucklauftbremse nach den Ansprüchen 5 und 7, dadurch gekennzeichnet, daß das 3/2-Wegeventil (18) und das Bypaßventil (48) mit zueinander parallelen, jedoch seitlich versetzten Achsen im Gehäuse (4) angeordnet sind, daß das patronenartig ausgebildete Magnetventil (43) an das Gehäuse (4) angesetzt ist, wobei in einen Druckluftversorgungskanal (39) zum Magnetventil (43) im Gehäuse (4) ein Rückschlagventil (40) und eine Drosselstelle (42) angeordnet sind, daß das Gehäuse (4) an einer Flanschfläche (16) Anschlußöffnungen (3, 8, 11, 12, 17) für den Druckversorgungskanal (39) zum Magnetventil (43), eine Entlüftung zur Atmosphäre, die Hauptluftleitung (1), den bremssteuerventilseitigen Abschnitt (9) und den bremszylinderseitigen Abschnitt (10) der Bremsdruckleitung (9,10) aufweist, daß sich im Gehäuse (4) mit der bremssteuerventilseitigen Anschlußöffnung (9) in Verbindung stehende Räume (28,30) befinden, deren einer Raum (30) vom Ventilsitz (53) des Bypaßventils (48) durchragt und von dessen Kolben (49) begrenzt ist und in deren anderen Raum (28) das Ventilrohr (19) mit seinem dem Ventildichtring (22) abgewandelten Ende ragt, daß ein vom Ventilsitz (24) des 3/2-Wegeventils (18) umschlossener, vom Stößel (20) durchragbarer Raum (25) mit dem Innenraum des Ventilsitzes (53) des Bypaßventils (48) und der Anschlußöffnung (12) für den bremszylinderseitigen Abschnitt (10) der Bremsdruckleitung (9,10) in Verbindung steht und daß ein des ventildichtringseitige Ende des Ventilrohres (19) umgebender Raum (31) mit der Anschlußöffnung (17) für die Entlüftung verbunden ist.

9. Durckluftbremse nach Anspruch 8, dadurch gekennzeichnet, daß das Ventilrohr (19) abgedichtet verschieblich einen im Gehäuse (4) gehalterten, radialen Lippendichtring (21) durchragt, dessen Aufnahmeraum (45) radialaußen an einen Abschnitt (47) des Druckluftversorgungskanals (39) angeschlossen ist, der sich zwischen dem Rückschlagventil (40) und dem Magnetventil (43) befindet.

10. Druckluftbremse nach Anspruch 8, dadurch gekennzeichnet, daß in einen Verbindungskanal (32) vom das ventildichtungsringseitige Ende des Ventilrohres (19) umgebenden Raum (31) zur Anschlußöffnung (17) für die Entlüftung eine Drossel (32a) eingeordnet ist (Fig.1).

11. Druckluftbremse nach Anspruch 8, dadurch gekennzeichnet, daß in einen Verbindungskanal (32) vom das ventildichtungsringseitige Ende des Ventilrohres (19) umgebenden Raum (31) zur Anschlußöffnung (17) für die Entlüftung ein Ventil (Ventilsitz 56, Ventildichtring 57) eingeordnet ist, welches vom Kolben (49) des Bypaßventils (48) schaltbar nur bei dessen überwiegender Beaufschlagung vom Druck im bremssteuerventilseitigen Abschnitt (9) der Bremsdruckleitung (9,10) geschlossen ist (Fig.2).

12. Druckluftbremse nach Anspruch 11, dadurch gekennzeichnet, daß der Ventilsitz (53) des Bypaßventils (48) sich an einem im Gehäuse (4) abgedichtet verschieblichen Ventilrohr (54) befindet, das einen gehäusefesten Ventilsitz (56) durchragt und in einem an den Verbindungskanal (32) zum das ventildichtungsringseititge Ende des Ventilrohres (19) umgebenden Raum (31) angeschlossenen Raum (55) mit einem Ventildichtring (57) endet, welcher zusammen mit dem Ventilsitz (56) das in den Vebindungskanal (32) eingeordnete, der Anschlußöffnung (17) zur Atmosphäre vorgeschaltete und von einer Feder (58) in Schließrichtung belastete Ventil bildet (Fig.2).

## Claims

1. Compressed air brake for railway vehicles furnished with a further additional preferably electric brake, with a stop valve (5) positioned in a brake pressure line (9, 10), the brake pressure line (9, 10) connecting a brake control valve (2) controlled by the pressure in a main air line directly or indirectly to at least one brake cylinder (13) and the stop valve (5) comprising a 3/2 distributing valve (18), which in its switch position corresponding to the further brake being inoperative opens the passage through the brake pressure line (9, 10) and in its other switch position corresponding to the further brake being operative blocks the passage and connects the section (10) of the brake pressure line (9, 10) on the brake cylinder side with the atmosphere, characterised in that a bypass valve (48) bridging the 3/2 distributing valve (18) is provided, which is only open during operation or driving of the compressed air brake exceeding the regulation range, and in this state opens a passage through the brake pressure line (9, 10) independently of the switch status of the distributing valve (18), and that the connection of the section (10) of the brake pressure line (9, 10) on the brake cylinder side with the atmosphere is at least throttled at least when the bypass valve (48) is open.

2. Compressed air brake according to claim 1, characterised in that the bypass valve (48) is switchable by a piston (49), the piston being acted upon in the direction of valve closure by the pressure in the main air line (1).

3. Compressed air brake according to claim 2, characterised in that the piston (49) is acted upon in the direction of valve opening by the pressure in the section (9) of the brake pressure line (9, 10) on the brake valve side.

4. Compressed air brake according to claim 3, characterised in that the piston (49) is loaded in the direction of valve closure by a spring (51).

5. Compressed air brake according to one or more of claims 2 to 4, characterised in that the bypass valve (48) has a fixed valve seat, which is positioned in a compressed air channel leading from the section (9) on the brake valve side to the section (10) on the brake cylinder side of the brake pressure line (9, 10) and which is tightly sealable by a valve seal (52) when the main air line pressure predominates on the piston (49).

6. Compressed air brake according to one or several of the above claims, characterised in that the bypass valve (48) is integrally arranged in the housing (4) of the stop valve (5).

7. Compressed air brake according to claim 6, characterised in that the 3/2 distributing valve (18) has, on the one hand, a valve tube (19) finishing with a valve sealing ring (22), the valve tube working together with a valve seat (24) which is fixed in the housing, being sealably and displaceably positioned in the housing and being loaded in the direction of displacement towards the valve seat (24) by a spring (23), and a stem (20) displaceable in the housing (4) and coaxial with the valve tube (19), the stem (20) being able to be pressed against the force of a spring (23) against the valve sealing ring (22), closing the valve tube (19), under the force of a piston (33), and the piston (33) being able to be acted on in the direction of the pressing by a control pressure controlled by a solenoid valve (43).

8. Compressed air brake according to claims 5 and 7, characterised in that the 3/2 distributing valve (18) and the bypass valve (48) are arranged with axes parallel to each other, but offset sideways, that the cartridge-like solenoid valve (43) is attached to the housing (4), a nonreturn valve (40) and a throttling point (42) being arranged in a channel (39) in the housing (4) supplying compressed air to the solenoid valve (43), in that on a flange surface (16) the housing has connection apertures (3, 8, 11, 12, 17) for the channel (39) supplying compressed air to the solenoid valve (43), a ventilation to the atmosphere, the main air line (1), the section (9) on the brake control valve side and the section (10) of the brake pressure line (9, 10) on the brake cylinder side, in that in the housing (4) chambers (28, 30) are in connection with the connection aperture (sic) (9) on the brake control valve side, of which one chamber (30) is penetrated by the valve seat (53) of the bypass valve (48) and limited by its piston (49) and into the other chamber (28) of which the valve tube (19) protrudes with its end remote from the valve sealing ring (22), in that a chamber (25) enclosed by the valve seat (24) of the 3/2 distributing valve (18) and penetrated by the stem (20) is connected with the interior of the valve seat (53) of the bypass valve (48) and the connection aperture (12) for the section (10) of the brake pressure line (9, 10) on the brake cylinder side and in that a chamber (31) surrounding the end of the valve tube (19) on the valve sealing ring side is connected with the connection aperture (17) for the ventilation.

9. Compressed air brake according to claim 8, characterised in that the valve tube (19) displaceably protrudes in a sealed manner through a radial lip sealing ring (21) held in the housing (4), the receiving space (45) for which is connected radially outwardly to a section (47) of the compressed air supply channel (39), which is situated between the nonreturn valve and the solenoid valve (43).

10. Compressed air brake according to claim 8, characterised in that a throttle (32a) is positioned in a connecting channel (32) from the chamber (31) surrounding the end of the valve tube (19) on the valve sealing ring side to the connection aperture (17) for the ventilation.

11. Compressed air brake according to claim 8, characterised in that a valve (valve seat 56, valve sealing ring 57) is positioned in a connecting channel (32) from the chamber (31) surrounding the end of the valve tube (19) on the valve sealing ring side to the connection aperture (17) for ventilation, the said valve being switchable by the piston (49) of the bypass valve (48) and only closed when the pressure in the section (9) of the brake pressure line (9, 10) on the brake control valve side, acting on the bypass valve, predominates (Figure 2).

12. Compressed air brake according to claim 11, characterised in that the valve seat (53) of the bypass valve (48) is situated on a valve tube (54) displaceably in the housing (4) in a sealed manner, which protrudes through a valve seat (56) fixed in the housing and terminates with a valve sealing ring (57) in a chamber (55) connected to the connection channel (32) to the chamber (31) surrounding the end of the valve tube (19) on the valve sealing ring side, the valve sealing ring together with the valve seat (56) forming the valve positioned in the connection channel (32), connected by the connection aperture (17) to the atmosphere and loaded by a spring (58) in the direction of closure (Figure 2).

## Revendications

1. Frein à air comprimé pour véhicules auto-moteurs sur rails, équipés en supplément d'un autre frein, de préférence électrique, comportant une soupape d'arrêt (5), qui est montée dans une canalisation de la pression de freinage (9,10), la canalisation de la pression de freinage (9,10) reliant directement ou indirectement une soupape de commande de frein (2), commandée par la pression dans une canalisation d'air principale (1), à au moins un cylindre de frein (13), et la soupape d'arrêt (5) contenant une soupape à 3/2 voies (18), qui, dans l'une de ses positions de commutation, qui correspond à l'état inactif de l'autre frein, libère le passage à travers la canalisation de la pression de freinage (9, 10) et, dans son autre position de commutation, qui correspond à l'état actif de l'autre frein, bloque le passage et relie à l'atmosphère la partie (20), située du côté du cylindre de frein, de la canalisation de la pression de freinage (9,10), caractérisé en ce qu'il est prévu une soupape de dérivation (48), qui shunte la soupape à 3/2 voies (18) et qui est ouverte uniquement lors d'un actionnement ou d'une commande du frein à air comprimé, qui dépasse la gamme de réglage, et libère un passage à travers la canalisation de la pression de freinage (9,10), indépendamment de l'état de commutation de la soupape à 3/2 voies (18), et en ce que la liaison de la partie (10), située du côté du cylindre de frein, de la canalisation de la pression de freinage (9,10) avec l'atmosphère est au moins étranglée, au moins lorsque la soupape de dérivation (48) est ouverte.

2. Frein à air comprimé selon la revendication 1, caractérisé en ce que la soupape de dérivation (48) peut être commutée par un piston (49), qui est sollicité, dans le sens de la fermeture de la soupape, par la pression régnant dans la canalisation d'air principale (1).

3. Frein à air comprimé selon la revendication 2, caractérisé en ce que le piston (49) est sollicité, dans le sens de l'ouverture de la soupape, par la pression régnant dans la partie (9), située du côté de la soupape de frein, de la canalisation de la pression de freinage (9,10).

4. Frein à air comprimé selon la revendication 3, caractérisé en ce que le piston (49) est chargé, dans le sens de fermeture de la soupape, par un ressort (51).

5. Frein à air comprimé selon une ou plusieurs des revendications 2 à 4, caractérisé en ce que la soupape de dérivation (48) possède un siège de soupape fixe (53), qui est disposé dans un canal d'air comprimé conduisant de la partie (9), située du côté de la soupape de frein, à la partie (10), située du côté du cylindre de frein, de la canalisation de la pression de freinage (9,10), et qui peut être fermé de façon étanche par un élément d'étanchéité de soupape (52), situé sur le piston (49), dans le cas où celui-ci est soumis, de façon prépondérante, à la pression dans la canalisation d'air principale.

6. Frein à air comprimé selon une ou plusieurs des revendications précédentes, caractérisé en ce que la soupape de dérivation (48) est disposée, d'une manière intégrée, dans le boîtier (4) de la soupape d'arrêt (5).

7. Frein à air comprimé selon la revendication 6, caractérisé en ce que la soupape à 3/2 voies (18) comporte un tube de soupape (19) se terminant d'un côté, par une bague d'étanchéité de soupape (22) et qui coopère avec un siège de soupape (24) solidaire du boîtier, est monté déplaçable, de façon étanche, dans le boîtier (4) et est chargé par un ressort (23) dans le sens de déplacement vers le siège de soupape (24), et un poussoir (20) coaxial au tube de soupape (19) et déplaçable dans le boîtier (4), le poussoir (20) pouvant être repoussé, à l'encontre de la force d'un ressort (26), contre la bague d'étanchéité de soupape (22), en fermant le tube de soupape (19), sous l'action de la force d'un piston (33), et le piston (33) pouvant être sollicité, dans le sens de la poussée, par une pression de commande commandée par une soupape magnétique (43).

8. Frein à air comprimé selon les revendications 5 et 7, caractérisé en ce que la soupape à 3/2 voies (18) et la soupape de dérivation (48) sont disposées dans le boîtier (4) avec leurs axes parallèles l'un à l'autre, mais décalés latéralement, en ce que la soupape magnétique (43) agencée à la manière d'une cartouche est rapportée sur le boîtier (4), une soupape antiretour (40) et un étranglement (42) étant disposés dans un canal d'alimentation en air comprimé (39) aboutissant à la soupape magnétique (43) dans le boîtier (4), en ce que le boîtier (4) comporte, au niveau d'une surface de bride (16), des ouvertures de raccordement (3,8,11,12,17) pour le canal d'alimentation en pression (39) aboutissant à la soupape magnétique (43), une purge dans l'atmosphère, la canalisation d'air principale (1), la partie (9), située du côté de la soupape de commande de frein, et la partie (10), située du côté du cylindre de frein, de la canalisation de la pression de freinage (9,10), en ce que, dans le boîtier (4), se trouvent des chambres (28,30) qui sont reliées à l'ouverture de raccordement (9), située du côté de la soupape de commande de frein, et dont l'une (30) est traversée par le siège (53) de la soupape de dérivation (48) et est limitée par le piston (49) de cette soupape, tandis que le tube de soupape (19) pénètre, par son extrémité tournée à l'opposé de la bague d'étanchéité de soupape (22), dans l'autre chambre (28), en ce qu'une chambre (25), qui est entourée par le siège (24) de la soupape à 3/2 voies (18) et peut être traversée par le piston (20), est reliée à l'espace intérieur du siège (53) de la soupape de dérivation (48) et à l'ouverture de raccordement (12) pour la partie (10), située du côté du cylindre de frein, de la canalisation de la pression de freinage (9,10) et en ce qu'une chambre (31), qui entoure l'extrémité, située du côté de la bague d'étanchéité de soupape, du tube de soupape (19), est reliée à l'ouverture de raccordement (17) pour la purge.

9. Frein à air comprimé selon la revendication 8, caractérisé en ce que le tube de soupape (19) traverse, avec possibilité de déplacement d'une manière étanche, une bague d'étanchéité à lèvre radiale (21), qui est retenue dans le boitier (4) et dont l'espace de logement (45) est raccordé, radialement vers l'extérieur, à une partie (47) du canal d'alimentation en air comprimé (39), qui est située entre la soupape antiretour (40) et la soupape magnétique (43).

10. Frein à air comprimé selon la revendication 8, caractérisé en ce qu'un étranglement (32a) est inséré dans un canal de liaison (32) allant de la chambre (31), qui entoure l'extrémité, située du côté de la bague d'étanchéité de soupape, du tube de soupape (19), à l'ouverture de raccordement (17) pour la purge (figure 1).

11. Frein à air comprimé selon la revendication 8, caractérisé en ce que, dans un canal de liaison (32) allant de la chambre (31), qui entoure l'extrémité, située du côté de la bague d'étanchéité de soupape, du tube de soupape (19), jusqu'à l'ouverture de raccordement (17) pour la purge, est insérée une soupape (siège de soupape 56, bague d'étanchéité de soupape 57), qui est fermée, d'une manière commutable, par le piston (49) de la soupape de dérivation (48), uniquement dans le cas où celui-ci est soumis, de façon prépondérante, à la pression régnant dans la partie (9), située du côté de la soupape de commande de frein, de la canalisation de la pression de freinage (9,10) (figure 2).

12. Frein à air comprimé selon la revendication 11, caractérisé en ce que le siège (53) de la soupape de dérivation (48) est situé sur un tube de soupape (54) qui est déplaçable sous étanchéité dans le boîtier (4) et qui traverse un siège de soupape (56) solidaire du boîtier et se termine, dans une chambre (55) raccordée au canal de liaison (32) aboutissant à la chambre (31) entourant l'extrémité, située du côté de la bague d'étanchéité de soupape, du tube de soupape (19), par une bague d'étanchéité de soupape (57), laquelle forme, conjointement avec le siège de soupape (56), la soupape insérée dans le canal de liaison (32), montée en amont de l'ouverture (17) de raccordement à l'atmosphère et chargée dans le sens de la fermeture par un ressort (58) (figure 2).
